(19) Europäisches Patentamt
European Patent Office
Office européen des brevets

(11) **EP 0 985 531 B1**

(12) **FASCICULE DE BREVET EUROPEEN**

(45) Date de publication et mention
de la délivrance du brevet:
**03.12.2003 Bulletin 2003/49**

(51) Int Cl.⁷: **B41F 33/00**, G06T 5/00

(21) Numéro de dépôt: **99810754.4**

(22) Date de dépôt: **23.08.1999**

(54) **Inspection automatique de la qualité d'impression par un modèle élastique**

Automatische Überwachung der Druckqualität durch ein elastisches Modell

Automatic inspection of print quality by an elastic model

(84) Etats contractants désignés:
**AT BE CH CY DE DK ES FI FR GB GR IE IT LI LU MC NL PT SE**

(30) Priorité: **07.09.1998 MC 2411**

(43) Date de publication de la demande:
**15.03.2000 Bulletin 2000/11**

(73) Titulaire: **KBA-GIORI S.A.**
**1002 Lausanne (CH)**

(72) Inventeur: **Stringa, Luigi**
**98000 Monaco (MC)**

(74) Mandataire: **Kiliaridis, Constantin et al**
**Bugnion S.A.,**
**10, Route de Florissant,**
**Case Postale 375**
**1211 Genève 12 (CH)**

(56) Documents cités:
**FR-A- 2 349 861**     **US-A- 5 251 271**
**US-A- 5 384 859**     **US-A- 5 712 921**

**Description**

La présente invention concerne un procédé de contrôle très soigneux de la qualité d'impression sur des matériaux déformables, comme des feuilles de papier, de plastique ou de caoutchouc. D'une façon plus précise, l'invention présente un procédé pour modifier, en temps réel pendant l'inspection, les modèles de référence utilisés d'habitude dans le contrôle automatique de la qualité d'impression de façon à inspecter correctement, même dans les cas où la déformation des feuilles produit des distorsions telles que les formes imprimées résultent très différentes du modèle, et néanmoins encore acceptables pour l'oeil humain. En effet, tous les procédés connus jusqu'à présent utilisent des modèles rigides (non déformables), et donc, pour faire face aux déformations des feuilles (papier, plastique, caoutchouc), sont obligés à relâcher considérablement les tolérances pour réduire le risque de fausses détections, notamment en produisant une réduction du soin d'inspection très souvent non acceptable.

On connaît en général plusieurs procédés pour juger la qualité d'impression : quelques exemples sont reportés sous la liste des références. Même si plusieurs auteurs ont proposé une grande variété d'implémentations, la presque totalité des solutions se fonde sur la même approche de base, qui peut bien être résumée comme il suit.

Un ensemble (Training Set, TS) de un ou de plusieurs échantillons d'objets (feuilles, etc.) avec une "bonne" qualité d'impression est utilisé pour "apprendre" au système d'inspection le modèle de référence, et (ou) les relatives tolérances d'impression en termes de mesures densitométriques. En général, le procédé consiste en une saisie, au moyen d'un système à balayage électronique, de(s) image(s) de(s) échantillon(s) du TS et de la construction d'un "modèle de référence" (parfois appelé "golden template") qui peut être la moyenne des images de TS (ou quelque souhaitable transformation d'elles). En plus de la valeur densitométrique de référence (c'est-à-dire, la valeur dans l'image de référence), pour chaque pixel de l'image analysée on calcule un couple de valeurs limites (par exemple, trop noir TD et trop clair TL). Plusieurs techniques ont été proposées pour extraire ces limites: par exemple certains auteurs utilisent le minimum (sur TS) des densités du pixel comme TD, et son maximum comme TL; des autres utilisent le gradient de l'image; des autres la déviation standard; etc. En tout cas, le modèle de référence est une description des tolérances d'impression qui associe à chaque pixel de l'image les limites densitométriques TD et TL. Ces descriptions sont "rigides", c'est-à-dire qu'il n'y a aucune possibilité de faire face aux déformations, qui produisent un déplacement relatif des structures imprimées. Donc, dans toutes les solutions précédentes, malgré l'introduction de quelques procédés astucieux pour relâcher les tolérances des seuils (TD et TL), les déformations du support (papier, plastique, etc.) sont la source principale de détection de "faux défauts", c'est-à-dire des imprimés qui n'ont pas de défauts pour un inspecteur humain, et qui par contre sont rejetés par le système. En plus, une telle augmentation des tolérances fait devenir l'inspection plutôt grossière et imprécise, en réduisant par conséquent le standard de qualité.

Selon la présente invention, les objets (feuilles de papier, de plastique, de caoutchouc, etc.) à inspecter sont analysés optiquement par des moyens optoélectroniques connus, comme par exemple une caméra CCD (linéaire ou matricielle, noir et blanc ou couleur), avec la résolution désirée pour produire des images électroniques des feuilles imprimées.

Une image électronique consiste en un ensemble discret de valeurs de densité, en général organisé comme une matrice rectangulaire. Chaque élément de la matrice (pixel) est une mesure de l'intensité de la lumière réfléchie par la partie de l'image correspondante. Ces valeurs de densité sont souvent numérisées en 256 niveaux de gris (par exemple, zéro correspond au noir, 255 au blanc).

Dans le cas d'images en couleur, la description en général consiste de trois matrices correspondantes aux composants rouge, vert et bleu de la lumière réfléchie par chaque pixel de l'image.

Par la suite, le terme "image" est utilisé toujours au lieu de "image électronique", soit dans le cas d'images en noir et blanc (une seule matrice des valeurs de densité), soit dans le cas d'images en couleurs (trois matrices).

Comme dans plusieurs solutions d'autres auteurs, le premier pas du procédé est la définition d'un ensemble d'apprentissage (Training Set TS) consistant en une ou plusieurs images des feuilles "bien imprimées" (c'est-à-dire, sans défauts non acceptables), qui seront utilisées pour construire un "modèle" de bonnes feuilles.

On procède selon les pas suivants :

- extraire de TS une image à utiliser comme référence (qui pourrait être une des images de TS, leur moyenne, ou n'importe quelle transformation convenable, comme par exemple l'image des bords des formes imprimées sur les feuilles);
- diviser l'image de référence en un grand nombre de sous-images, par exemple en superposant une grille (régulière ou non) comme montré à la planche I/4 b);
- choisir dans chaque maille de la grille une structure très caractéristique de la forme imprimée (voir Planche II/4), dont la position sera utilisée pour mesurer les déformations du support. Par la suite, nous appellerons les positions desdites structures noeuds du modèle.
- Ces structures peuvent varier de certaines caractéristiques topologiques très sophistiquées, à d'autres assez plus simples, comme le maximum du gradient de l'image à l'intérieur de la maille. Quelques techniques pour extraire automatiquement les structures caractéristiques, et donc les noeuds du modèles, seront illustrées dans les variantes préférées;

- définir pour chaque noeud un seuil de déformation comme le déplacement maximum acceptable du noeud de sa position dans l'image de référence.

On peut finalement construire (à partir des images de TS) pour chaque pixel du modèle, les seuils densitométriques (par exemple, trop noir TD et trop clair TL) selon une quelconque des techniques, notamment utilisées pour ce bout (max-min; déviation standard; variation du gradient; etc.), mais avant leur calcul, on procède sur chaque image de TS aux élaborations suivantes :

- mesurer le déplacement de chaque noeud de l'image de TS par rapport au noeud correspondant sur l'image de référence;
- produire une déformation élastique de l'image de TS de façon que tous ses noeuds aient la même position que dans l'image de référence. Ce pas peut être exploité avec la précision désirée en utilisant un quelconque algorithme connu de déformation des images, comme par exemple celui appelé "2-pass mesh warping" (voir référence 1).

Selon la présente invention, le procédé de construction du modèle est réalisé sur les images du TS convenablement déformées de façon que les noeuds aient la même position que dans l'image de référence.

Pendant l'inspection, les images à évaluer pour vérifier leurs qualité d'impression, sont tout d'abord élaborées de la même façon que les images du TS, et ensuite comparées avec les limites du modèle (seuils) comme dans d'autres approches. Un tel procédé assure que les déformations plus petites que les seuils de déformation d'ailleurs définis seront corrigés pour garantir une inspection très soigneuse, autant que les feuilles excessivement déformées seront rejetées comme défectueuses.

Enfin, il est évident qu'on peut obtenir le même résultat en déformant le modèle .(avec ses limites, par exemple les seuils TD et TL) au lieu de corriger les images à inspecter.

La planche I/4 représente en a) le caractère "A" comme exemple de forme imprimée, et en b) la superposition d'une grille 3 x 3.

La planche II/4 représente en a) cinq structures caractéristiques de la forme en Planche I/4, et en b) l'association des cinq noeuds (de K1 à K5) à ces structures.

La planche III/4 représente en a) un exemple de déformation du caractère "A" de la planche II/4, et en b) les positions des noeuds sur la forme déformée surlignant pour chaque noeud le déplacement correspondant. Plus précisément, si Ki [i $\in$ (1,5)] est la position du $i^{ème}$ noeud dans l'image originale, et K'i sa position dans l'image déformée, on trouve que dans notre exemple tous les déplacements $\Delta x_i$ et $\Delta y_i$ sont zéro, excepté $\Delta x_2$ et $\Delta x_5$.

La planche IV/4 montre un arrangement typique du système d'inspection décrit dans le texte.

Comme exemple de la présente invention, une des variantes préférées sera décrite par la suite sur la base de dessins.

La planche IV/4 représente un arrangement du système d'inspection où une caméra 1 linéaire CCD, avec ses lentilles 2 et son système d'illumination 3, est utilisée pour saisir les images des feuilles 4 à inspecter autant qu'elles tournent sur le cylindre 5.

Les lignes balayées par la caméra sont mémorisées en séquence dans un premier circuit (mémoire) tampon du sous-système d'élaboration de l'image 6 pour produire une image (électronique) de chaque feuille.

Le sous-système d'élaboration de l'image 6, qui pourrait être basé soit sur hardware spécial, soit sur ordinateur programmable, comme DSP (Digital Signal Processor), des PC très rapides, etc., réalise des opérations différentes pendant la phase de construction du modèle et la phase d'inspection.

Pendant la phase de construction du modèle;

- il saisit les images des feuilles du TS et les mémorise dans une mémoire appropriée;
- il extrait du TS l'image de référence (soit automatiquement, soit à l'aide de l'opérateur, au moyen de la console de l'Interface Opérateur 7);
- il superpose une grille sur l'image de référence. Le nombre de lignes et de colonnes de la grille peut être soit prédéfini, soit entré par l'opérateur au moyen de l'Interface Opérateur 7;
- il identifie dans chaque maille de la grille la position d'un noeud, comme les coordonnées du pixel ou la quantité q donnée par

$$q = \left( \sum_A \left| \frac{\partial I(P)}{\partial X} \right| \right) \bullet \left( \sum_A \left| \frac{\partial I(P)}{\partial Y} \right| \right) \qquad [1]$$

# EP 0 985 531 B1

à son maximum sur la maille.

Dans l'équation [1] I(P) est la valeur de l'image électronique à la position du pixel P et A est une très petite surface (peu de pixels) carrée dont le centre est en P.

En maximisant le produit de la somme sur A des valeurs absolues de dérivés partiels, on s'assure que le noeud est une structure dont la position verticale et horizontale sont facilement détectables.

Ensuite, chaque image du TS est élaborée par le sous-système d'élaboration de l'image 6 selon les pas suivants :

- identification du déplacement $\Delta x$, $\Delta y$ de chaque noeud de l'image de TS par rapport au noeud correspondant dans l'image de référence. Dans cette variante, l'opération est effectuée, en utilisant la méthode de corrélation maximum : une petite portion rectangulaire $S_0$ de l'image de référence, avec centre sur les coordonnées $x_0$, $y_0$ du noeud, est comparée avec une portion $S_1$, avec les mêmes dimensions, dont le centre est déplacé pas à pas sur chaque position (pixel) de l'image de TS pour trouver la position $x_1$, $y_1$ où le coefficient de corrélation a son maximum. Le déplacement est alors donné par $\Delta x = x_1 - x_0$ et $\Delta y = y_1 - y_0$;
- déformation de l'image de TS de façon à obtenir que ses noeuds aient la même position que sur l'image de référence. Dans cette variante, l'opération est effectuée en utilisant l'algorithme déjà mentionné appelé "2-pass mesh warping" (voir référence 1)
- calcul sur les images déformées du TS de la moyenne Avg(P) et de la déviation standard Sgm (P) de chaque pixel de l'image.

Pendant la phase d'inspection, selon la présente variante de l'invention, le sous-système d'élaboration de l'image 6 :

- opère d'abord sur chaque image à contrôler, saisie par la caméra 1, les mêmes déformations utilisées pendant la phase de construction du modèle. L'image à contrôler sera donc déformée de façon que ses noeuds aient les mêmes positions que dans l'image de référence;
- ensuite, calcule la différence $\Delta(P)$ entre la valeur I (P) de chaque pixel P de l'image à contrôler et la valeur correspondante de la moyenne Avg(P)
- enfin, rejette comme défectueuses les feuilles trop déformées (c'est-à-dire, les feuilles dont le déplacement d'au moins un noeud est plus grand des seuils déjà définis). Il rejette aussi les feuilles dont $\Delta(P) > KSgm(P)$ sur au moins M pixel à l'intérieur d'une aire avec centre en P et radius R. Les paramètres K, M et R peuvent être choisis par l'opérateur pour définir le soin d'inspection (au moyen de l'Interface Opérateur 7).

Les autres variantes préférées comprennent :

a) la substitution de la caméra linéaire avec une caméra matricielle. Dans un tel cas, le sous-système d'illumination devra utiliser des dispositifs-flash, synchronisés avec la fréquence image de la caméra, pour assurer une correcte saisie de l'image

b) l'utilisation comme image de référence de la moyenne des images du TS

c) la sélection manuelle des noeuds

d) l'utilisation d'une multitude de petits masques (templates), (chacun avec centre sur un noeud) pour chercher le déplacement des noeuds avec une technique telle que celle appelée "de la meilleure superposition" (best matching)

e) l'approche déjà mentionnée dans laquelle au lieu de déformer l'image à inspecter de façon à positionner ses noeuds comme dans le modèle (image de référence), on déforme le modèle de façon que ses noeuds aient la même position que sur l'image à inspecter

f) l'utilisation d'une définition des seuils différente de celle de la proportionnalité à la déviation standard.

REFERENCES.

1 Catmull, E. et alt., "2D Transformations of Images in Scanline Order" - Computer Graphics, (SIGGRAPH 80 Proceedings), vol. 14, n° 3, pp. 279-285, juillet 1980.

2 L. Stringa, "Installation for Quality Control of Printed Sheets, Especially Security Security Paper" - 4 février 1994 - US Patent n° 5,598,006.

**EP 0 985 531 B1**

3 L. Stringa, "Procedure for producing a reference model intended to be used for automatically checking the printing quality of an image on paper" - 7 mars 1995 - US Patent n° 5,778,088.

4 Bolza Shuneman et alt. - "Method for Quality Control of Printed Sheets" - 24 janvier 1995 - US Patent n° 5,384,859.

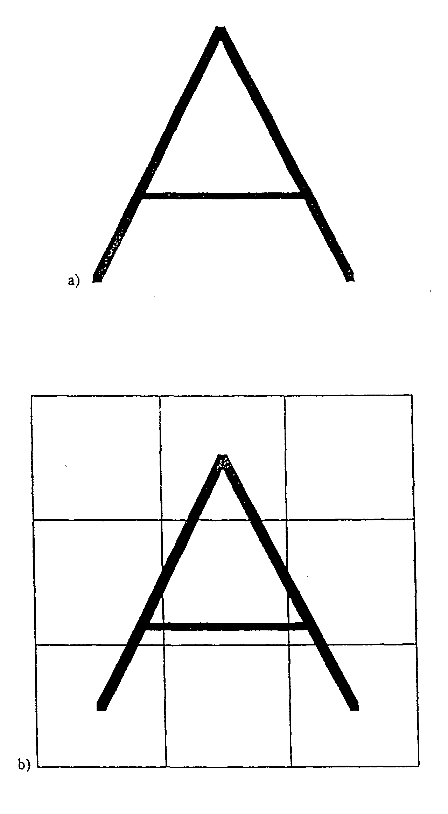

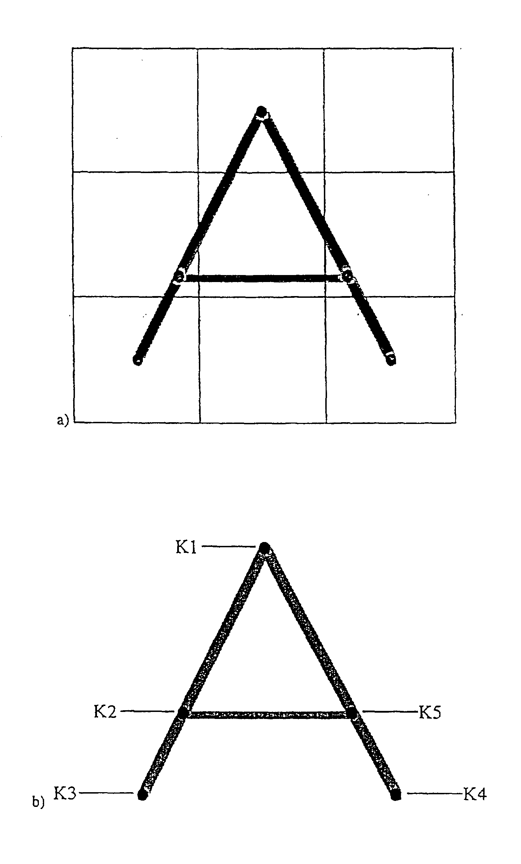

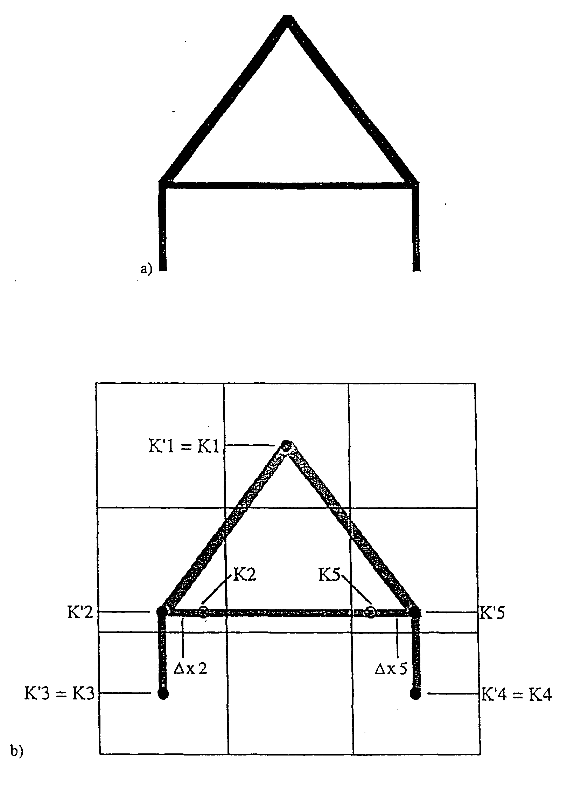

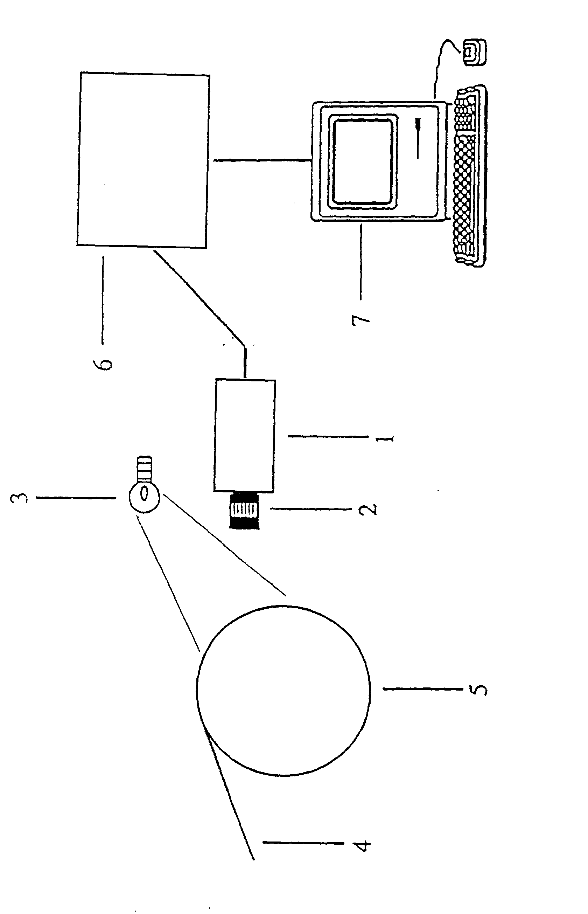

## Revendications

1. Procédé pour juger automatiquement la qualité d'impression d'images imprimées sur un support déformable, comme des feuilles en caoutchouc, en plastique ou en papier, en utilisant un dispositif optoélectronique de saisie d'image et un système d'élaboration de l'image qui mesure la déformation du support en superposant à l'image à inspecter une grille convenable, et ensuite en mesurant le déplacement des noeuds de la grille par rapport à leur position sur une image considérée comme image de référence non déformée, et qui, avant de les comparer avec des seuils, déforme les images à inspecter de façon que leurs noeuds aient la même position que celle de l'image de référence.

2. Procédé selon la revendication 1 dans lequel l'image de référence est une des images d'un Training Set (TS).

3. Procédé selon la revendication 1 dans lequel l'image de référence non déformée est la moyenne des images d'un Training Set (TS).

4. Procédé selon les revendications 1, 2 et 3 dans lequel les noeuds sont positionnés manuellement par l'opérateur sur des structures caractéristiques de la forme imprimée.

5. Procédé selon les revendications 1, 2 et 3 dans lequel les noeuds sont positionnés automatiquement sur le maximum à l'intérieur de chaque maille de la grille de la quantité (q) définie par l'équation

$$q = \left( \sum_A \left| \frac{\partial I(P)}{\partial X} \right| \right) \bullet \left( \sum_A \left| \frac{\partial I(P)}{\partial Y} \right| \right) \qquad [1]$$

6. Procédé selon les revendications 1, 2 et 3 dans lequel les noeuds sont identifiés automatiquement par l'extraction à l'intérieur de chaque maille de la grille d'une structure caractéristique soit du point de vue topologique, soit géométrique, comme notamment des contours, des bords, angles, des segments, des trous, etc. au moyen d'une quelconque des techniques d'extraction des structures caractéristiques bien connues.

7. Procédé selon les revendications 1, 2, 3, 4, 5 et 6 dans lequel la déformation des images est obtenue au moyen d'un algorithme connu appelé "2-pass mesh warping".

8. Procédé selon la revendication 1 dans lequel la déformation des images est calculée par approximation selon des techniques autres qu'un algorithme "2-pass mesh warping", incluant mais ne se limitant pas aux déformations élastiques, à l'interpolation bilinéaire ou d'un degré quelconque, et à la translation rigide de la maille de la grille.

9. Procédé selon les revendications 1, 2, 3, 4, 5, 6, 7 et 8 dans lequel, au lieu de déformer les images à inspecter de façon à obtenir les mêmes positions des noeuds que dans l'image de référence, on déforme le modèle à savoir l' image de référence de façon à obtenir les mêmes positions des noeuds que dans l'image à inspecter.

10. Procédé selon les revendications 1, 2, 3, 4, 5, 6, 7, 8 et 9 dans lequel les noeuds sont cherchés sur des zones de la feuille d'une façon différente de la superposition de la grille, incluant la recherche aléatoire.

## Claims

1. A process for automatically judging the print quality of images printed on a deformable carrier, such as sheets of rubber, plastic or paper, by using an optoelectronic image capture device and an image processing system which measures the deformation of the carrier by superimposing a suitable grid on the image to be inspected, and thereafter by measuring the displacement of positions of nodes of the grid with respect to their position in an image regarded as an undeformed reference image and which, before comparing them with thresholds, deforms the images to be inspected so that their nodes have the same position as those of the reference image.

2. The process as claimed in claim 1, in which the reference image is one of the images of a Training Set (TS).

3. The process as claimed in claim 1, in which the undeformed reference image is an average of the images of a Training Set (TS).

4. The process as claimed in one of the claims 1, 2 and 3, in which the nodes are positioned manually by the operator on characteristic structures of the printed shape.

5. The process as claimed in one of the claims 1, 2 and 3, in which the nodes are positioned automatically at a maximum over each mesh cell of the grid of the quantity (9) defined by Equation

$$q = (\Sigma_A|\partial I(P)/\partial x|) \cdot (\Sigma_A|\partial I(P)/\partial y|).$$

6. The process as claimed in one of the claims 1, 2 and 3, in which the nodes are identified automatically by extracting inside each mesh cell of the grid a characteristic structure either from the topological or geometrical point of view, such as in particular contours, edges, angles, segments, holders, etc. by means of any technique for extracting well-known characteristic structures.

7. The process as claimed in one of the claims 1, 2, 3, 4, 5 and 6, in which the deformation of the images is obtained by means of a known algorithm referred to as "2-pass mesh warping"

8. The process as claimed in one of the claims 1, 2, 3, 4, 5 and 6 in which the deformation of the images is calculated by approximation according to techniques selected from a group of techniques different from an algorithm "2-pass mesh warping" including, but not limited to, elastic deformations, bilinear interpolation or interpolation of any degree, and rigid translation of the mesh cell of the grid.

9. The process as claimed in one of the claims 1, 2, 3, 4, 5, 6, 7 and 8, in which, instead of deforming the images to be inspected so as to obtain the same positions of the nodes as in the reference image, the model (reference image) is deformed so as to obtain the same positions of the nodes as in the image to be inspected.

10. The process as claimed in one of the claims 1, 2, 3, 4, 5, 6, 7, 8 and 9 in which the nodes are searched for over regions of the sheet in a manner different from the superposition of the grid, including random searching.

**Patentansprüche**

1. Verfahren zur automatischen Beurteilung der Druckqualität von Bildern, die auf einem verformbaren Träger gedruckt sind, wie Bogen aus Gummi, Kunststoff oder Papier, unter Verwendung einer optoelektronischen Vorrichtung zum Erfassen des Bildes und eines Bildverarbeitungssystems, welches die Verformung des Trägers durch Überlagerung des zu inspizierenden Bildes mit einem geeigneten Gitter misst und danach die Verschiebung der Gitterknoten in bezug auf ihre Position auf einem als nicht verformtes Bezugsbild betrachteten Bild misst, und welches, bevor sie mit Schwellwerten verglichen werden, die zu inspizierenden Bilder verformt, so dass ihre Knoten dieselbe Position einnehmen wie die des Bezugsbilds.

2. Verfahren nach Anspruch 1, bei welchem das Bezugsbild eines der Bilder eines Training-Sets (TS) ist.

3. Verfahren nach Anspruch 1, bei welchem das nicht verformte Bezugsbild das Mittel der Bilder eines Training-Sets (TS) ist.

4. Verfahren nach den Ansprüchen 1, 2 u 3, bei welchem die Knoten manuell durch den Operateur auf Strukturen positioniert werden, die für die gedruckte Form charakteristisch sind.

5. Verfahren nach den Ansprüchen 1, 2 und 3, bei welchem die Gitterknoten automatisch auf das Maximum einer Grösse (q) im Inneren jeder Gittermasche positioniert werden, wobei q durch die Gleichung

$$q = (\Sigma_A |\partial I(P)/\partial x|) \cdot (\Sigma_A |\partial I(P)/\partial y|)$$

definiert ist.

6. Verfahren nach den Ansprüchen 1, 2 und 3, bei welchem die Gitterknoten automatisch durch Gewinnen einer charakteristischen Struktur im Innern jeder Gittermasche identifiziert werden, wobei diese Struktur vom topologischen oder geometrischen Standpunkt aus, wie vor allem vom Standpunkt der Umrisse, Ränder, Winkel, Segmente, Löcher usw. charakteristisch ist und wobei irgendeine der wohl bekannten Methoden zum Gewinnen charakteristischer Strukturen verwendet wird.

7. Verfahren nach den Ansprüchen 1, 2, 3, 4, 5 und 6, bei welchem die Verformung der Bilder mittels eines unter dem Namen "2-pass mesh warping" bekannten Algorithmus erhalten wird.

8. Verfahren nach Anspruch 1, bei welchem die Verformung der Bilder durch Näherung gemäss anderer Methoden als einem Algorithmus "2-pass mesh warping" berechnet wird, welche elastische Verformungen, bilineare Interpolation oder Interpolation beliebigen Grades und starre Translation der Gittermasche einschliessen, jedoch nicht darauf begrenzt sind.

9. Verfahren nach den Ansprüchen 1, 2, 3, 4, 5, 6, 7 und 8, bei welchem, anstatt die zu inspizierenden Bilder so zu verformen, dass dieselben Positionen der Knoten wie im Bezugsbild erhalten werden, das Modell, das heisst das Bezugsbild, so verformt wird, dass dieselben Positionen der Knoten wie im zu inspizierenden Bild erhalten werden.

10. Verfahren nach den Ansprüchen 1, 2, 3, 4 , 5, 6, 7, 8 und 9, bei welchem die Knoten in Bereichen des Bogens auf andere Weise als durch Überlagerung des Gitters gesucht werden, einschliesslich der Zufallsrecherche.

a)

b)

a)

K1

K2 — K5

K3 — K4

b)

a)

b)

K'1 = K1

K2    K5

K'2    K'5

Δx2    Δx5

K'3 = K3    K'4 = K4